# EUROPEAN PATENT SPECIFICATION

(11) **EP 1 308 201 B1**
(45) Date of publication and mention of the grant of the patent: **05.01.2005**
(21) Application number: 02024428.1
(22) Date of filing: 29.10.2002
(51) Int. Cl.: B01D 61/48, C02F 1/469, B01J 47/08

(54) **Electrodeionization apparatus**
Vorrichtung für Elektrodeionisation
Appareil de desionisation electrique

(30) Priority: 31.10.2001 JP 2001334950; 09.11.2001 JP 2001344782
(43) Date of publication of application: 07.05.2003
(73) Proprietor: KURITA WATER INDUSTRIES LTD., Shinjuku-ku Tokyo (JP)
(72) Inventor: Miwa, Masayuki, Shinjuku-ku, Tokyo (JP); Sato, Shin, Shinjuku-ku, Tokyo (JP)
(74) Representative: Banzer, Hans-Jörg, Dipl.-Ing.

(56) References cited:
- EP-A- 1 068 901
- EP-A- 1 075 868
- WO-A-00/67906
- US-A- 5 858 191
- US-A- 5 954 935
- US-A- 6 056 878
- US-A- 6 156 180
- US-B1- 6 248 226
- US-B1- 6 284 124

## Description

### Field of the Invention

The present invention relates to an electrodeionization apparatus.

### Background of the Invention

A conventional electrodeionization apparatus has a plurality of cation exchange membranes and a plurality of anion exchange membranes which are alternately arranged between electrodes including an anode and a cathode in such a manner as to alternately form desalting compartments and concentrating compartments. The desalting compartments are filled with an ion exchange resin. Voltage is applied between the cathode and the anode, water to be treated is introduced into the desalting compartments, and concentrated water is introduced into the concentrating compartments, so that impurity ions are removed from the water to be treated and deionized water is produced.

Since a plurality of the desalting compartments and a plurality of the concentrating compartments are alternately formed between the anode and the cathode, the conventional electrodeionization apparatus has high electrical resistance between the anode and the cathode, and thus resulting in high applied voltage therebetween.

Cations including calcium ions (Ca²⁺) migrate from the desalting compartment to the concentrating compartment through the cation exchange membrane, and anions including bicarbonate ions (HCO₃⁻) migrate thereto through the anion exchange membrane. Application of the direct electric current is accompanied by production of OH- ions on the surface of the anion-exchange membrane, resulting in a partial rise in pH at the surface thereof. Due to the high pH at the surface of the anion-exchange membrane and the concentration of the bicarbonate ions having migrated from the desalting compartment and then been highly concentrated at the surface thereof and the calcium ion in the concentrating compartment, calcium carbonate can be produced on a surface of the anion-exchange membrane facing on the concentrating compartment, even when pH in the concentrating compartment or the concentration of the bicarbonate ions and the calcium ions therein do not meet the condition under which calcium carbonate is produced.

The calcium carbonate is dissolution retardant and its production in the concentrating compartment can obstruct the flow in the concentrating compartment and rise the electrical resistance in the electrodeionization apparatus.

JPH10-43554A disclosed a method for restraining the partial rise in the concentration of the OH⁻ ions in order to prevent the production of the calcium carbonate by filling the cathode compartment with electrically conductive materials so as to increase an effective surface area of the cathode. The method is effective in preventing the production of the calcium carbonate in the cathode compartment, but it is not effective in preventing the production thereof in the concentrating compartment, so that when raw water contains high concentration of the calcium ions and the bicarbonate ions, the concentration of the calcium ion and the bicarbonate ion in the concentrating compartment becomes high and thus the calcium carbonate precipitates therein.

An electrodeionization apparatus according to the preamble of independent claim 1 is, e.g., known from EP-A-1 075 868, EP-A-1 068 901, US-A-5,858,191 or WO-A-00/67906.

### Summary of the invention

According to the present invention, an electrodeionization apparatus as defined in independent claim 1 is provided. The dependent claims define preferred and advantageous embodiments of the present invention. The electrodeionization apparatus of the present invention comprises a cathode, an anode, a cation exchange membrane and an anion exchange membrane arranged between the cathode and the anode, and a desalting compartment formed between the cation exchange membrane and the anion exchange membrane. An ion exchanging material is filled in the desalting compartment. A channel for cations is provided in the cathode, and a channel for anions is provided in the anode, the cation exchange membrane being in contact with the cathode, and the anion exchange membrane being in contact with the anode.

Raw water containing cations and anions is fed into the desalting compartment, and at least a part of the cations passes through the cation exchange membrane so as to be removed from the raw water, and at least a part of the anions passes through the anion exchange membrane so as to be removed from the raw water.

### Brief Description of the Drawings

Fig.1 is a vertically sectional view schematically showing an electrodeionization apparatus;
Fig.2a and 2b are vertically sectional views each schematically showing another electrodeionization apparatus;
Fig. 3 is a vertically sectional view schematically showing an electrodeionization apparatus according to an embodiment of the invention;
Fig.4 is an exploded perspective view showing another electrodeionization apparatus;
Fig.5 is a perspective view of a partition member;
Fig.6 is an exploded view of the partition member;
Fig.7 illustrates a water flow situation of the partition member; and
Fig.8 is a vertically sectional view schematically showing an electrodeionization apparatus according to a comparative example.

### Detailed Description

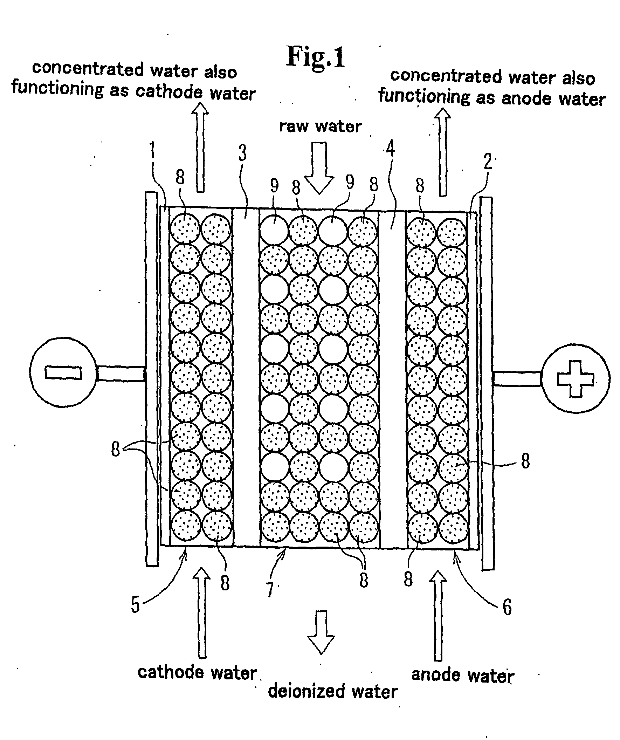

An electrodeionization apparatus will be described hereinafter with reference to Fig. 1 which is a vertically sectional view thereof.

As shown in Fig.1, a cation exchange membrane 3 and an anion exchange membrane 4 are arranged between a cathode 1 and an anode 2. A cathode-concentration compartment 5 also working as a cathode compartment and a concentrating compartment is formed between the cathode 1 and the cation exchange membrane 3, and an anode-concentration compartment 6 also working as an anode compartment and a concentrating compartment is formed between the anode 2 and the anion exchange membrane. A desalting compartment 7 is formed between the cation exchange membrane 3 and the anion exchange membrane 4. The cathode-concentration compartment 5 and the anode-concentration compartment 6 are filled with a cation exchange resin 8. It should be noted that a mixture of a cation exchange resin and an anion exchange resin can fill the cathode-concentration compartment 5 and the anode-concentration compartment 6 instead of the cation exchange resin 8. The cation exchange resin has high strength. The desalting compartment 7 is filled with a mixture of the cation exchange resin 8 and the anion exchange resin 9.

The anode-concentration compartment 6 is a channel for anions, and the cathode-concentration compartment 5 is channel for cations.

While a voltage is applied between the cathode 1 and the anode 2, raw water is fed into the desalting compartment 7 and flows out as deionized water. Cathode water is fed to the cathode-concentration compartment 5 and anode water is fed to the anode-concentration compartment 6. Cations in the raw water permeate the cation exchange membrane 3 and flows out along with the cathode water. Anions in the raw water permeate the anion exchange membrane 4 and flows out along with the anode water.

Since only one desalting compartment, one cathode-concentration compartment 5, and one anode-concentration compartment 6 are arranged between the cathode 1 and the anode 2, the distance between the cathode 1 and the anode 2 is small. Therefore, even when the voltage applied between the electrodes 1 and 2 is low, enough electric current flows therebetween during the deionization process.

Ca²⁺ ions in the desalting compartment 7 migrate to the cathode-concentration compartment 5 and HCO₃⁻ ions migrates to the anode-concentration compartment 6. Since Ca²⁺ and HCO₃⁻ ions do not meet either in the anode-concentration compartment or in the cathode-concentration compartment, scales are prevented from precipitating therein.

Since the electrode-concentration compartments 5, 6 also work as concentrating compartments, the electric conductance of the electrode water becomes high. This also makes it possible that enough electric current flows between the electrodes 1 and 2 even when the voltage applied therebetween is low.

The direction of the flow of the water in the electrode-concentration compartments 5 and 6 may be either parallel to or counter to that in the desalting compartment 7. The water flows preferably upwardly in the compartments 5,6 for prevention of channeling by promoting removal of gas by the upward flow since gases such as H₂ and O₂ are generated by the direct electric current in each of the electrode compartment.

A part of the raw water may be fed to the anode-concentration compartment 6 or the cathode-concentration compartment 5 as electrode water, whereby the anions migrating from the desalting compartment 7 to the anode-concentration compartment 6 and the cations migrating from the desalting compartment to the cathode-concentration compartment 5 do not meet each other, so that production of scales can be prevented.

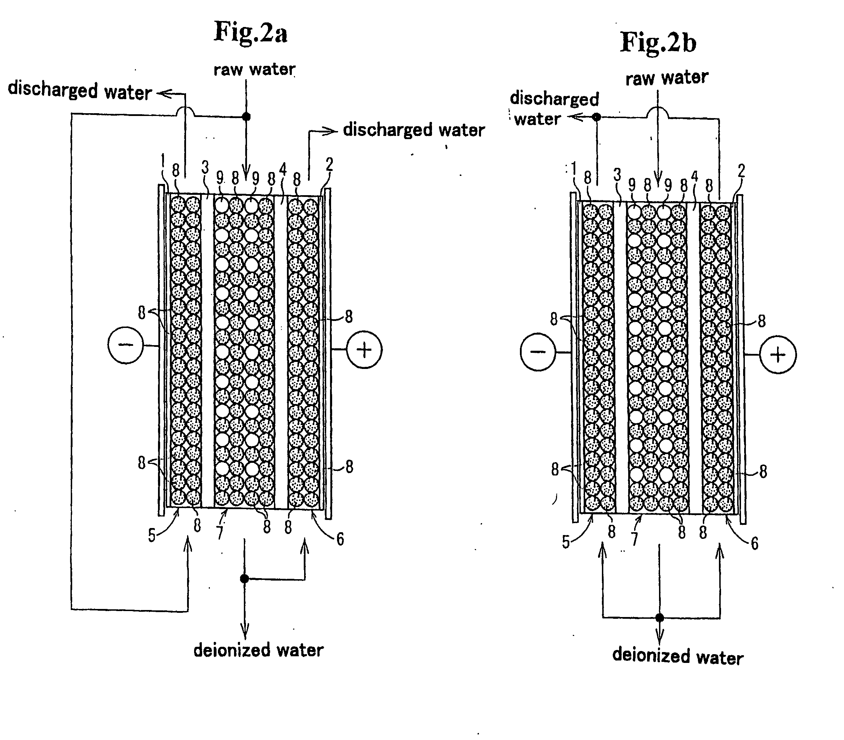

As shown in Fig.2a, a part of the deionized water flowing out of the desalting compartment 7 may be fed into the anode-concentration compartment 6, and a part of the raw water may be fed into the cathode-concentration compartment 5. The cation exchange resin 8 filled in the cathode-concentration compartment 5 restrains the tendency to produce the calcium carbonate, so that of the calcium carbonate is sufficiently prevented from precipitating.

As shown in Fig.2b, a part of the deionized water flown out of the desalting compartment 7 may be fed into both the anode-concentration compartment 6 and cathode-concentration compartment 5. The anions including bicarbonate ions in the raw water migrate to anode-concentration compartment 6 through the anion exchange membrane 4 so as to be concentrated in the anode-concentration compartment 6, and the cations including calcium ions in the raw water migrate to cathode-concentration compartment 5 through the cation exchange membrane 3 so as to be concentrated in the cathode-concentration compartment 5. In the electrodeionization apparatus shown in Fig.2b, since the deionizaed water which is merely free from the bicarbonate ions and the calcium ions is fed to the anode-concentration compartment 6 and the cathode-concentration compartment 5, production of calcium carbonate does not occur in either the cathode-concentration compartment 5 or the anode-concentration compartment 6.

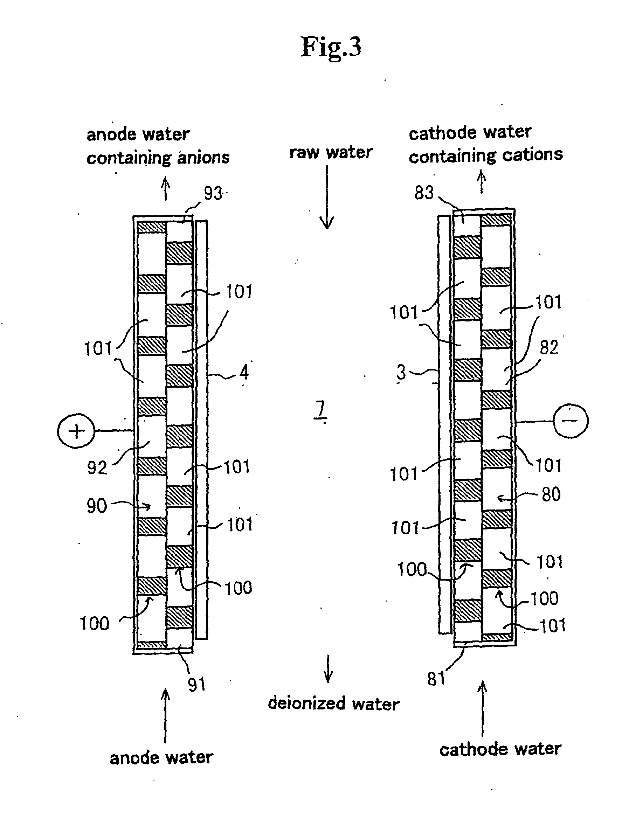

Hereinafter, an electrodeionization apparatus according to an embodiment of the invention will be described with reference to Fig.3.

A cathode plate 80 and an anode plate 90 are arranged to face each other. The cathode plate 80 and the anode plate 90 are each composed of a laminate of a plurality of perforated plates 100. In Fig.3, the cathode plate 80 and the anode plate 90 are each composed of two perforated plates 100, but they may be each composed of three or more perforated plates 100. Holes 101 of the perforated plate 100 penetrate the plate through its full thickness. The holes 101 of one perforated plate 100 partially overlap with adjacent ones of another perforated plate 100, so that channels 82 for cations are formed to extend from one end of the cathode plate 80 to the other end thereof, and channels 92 for anions are formed to extend from one end of the anode plate 90 to the other end thereof.

The channel 82 has an inlet 81 at one end of the cathode plate 80 and has an outlet 83 at the other end thereof. The channel 92 has an inlet 91 at one end of the anode plate 90 and has an outlet 93 at the other end thereof. Unlike the electrodeionization apparatus as shown in Fig.1, the channels 82 for cations and the channels 92 for anions are not filled with an ion exchange resin.

The cation exchange membrane 3 is in contact with the cathode plate 80 and the anion exchange membrane 4 is in contact with the anode plate 90. The desalting compartment 7 is formed between the membranes 3 and 4 and is filled with a mixture of the cation exchange resin 8 and the anion exchange resin 9 (not shown in Fig.3).

Raw water is introduced into the desalting compartment 7 while voltage is applied between the plates 80 and 90, and deionized water flows out of the compartment 7. Cathode water is fed to the channel 82 for cations and anode water is fed to the channel 92 for anions. Cations contained in the raw water pass through the cation exchange membrane 3 and flow out through the channel 82 and the outlet 83. Anions contained in the raw water pass through the anion exchange membrane 4 and flow out through the channel 92 and the outlet 93.

In this electrodeionization apparatus, only one desalting compartment 7 is arranged between the cathode plate 80 and anode plate 90, the membrane 3 is in the contact with the cathode plate 80, and the membrane 4 is in contact with the cathode plate 90, so that the distance between the cathode plate 80 and the anode plate 90 is small. Therefore, even when the voltage applied between the cathode plate 80 and the anode plate 90 is low, enough electric current flows therebetween during the deionization process.

The direction of the flow of the water in the channels 82 and 92 may be either parallel to or counter to that in the desalting compartment 7. The water flows preferably upwardly in the channels 82 and 92 for promoting removal of gas by the upward flow since gases such as H₂ and O₂ are generated by the direct electric current in each of the channels 82 and 92.

A part of the raw water may be fed to the channels 82 and 92 as electrode water, whereby the anions migrating from the desalting compartment 7 to the channel 92 and the cations migrating from the desalting compartment to the channel 82 do not meet each other, so that production of scales can be prevented.

A part of the deionized water discharged from the desalting compartment 7 may be fed to the channel 92. A part of the raw water may be fed to the channel 82.

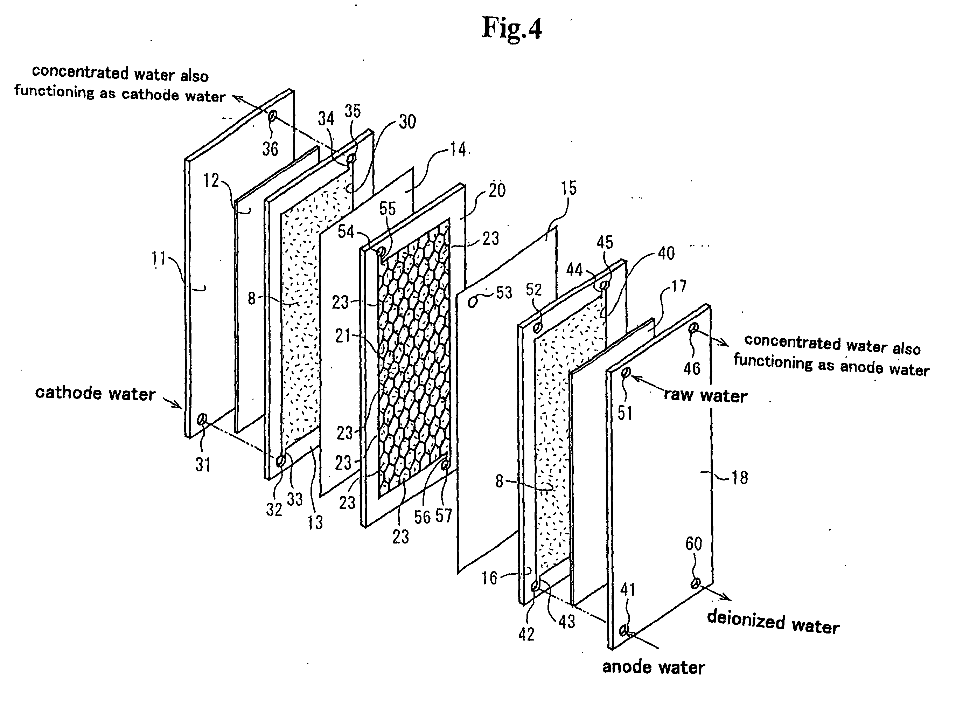

Hereinafter, an electrodeionization apparatus in which the desalting compartment is divided into a plurality of cells by a partition member will be described with reference to Figs.4 to 7.

The electrodeionization apparatus includes a cathode end plate 11, a cathode plate 12 extending along the end plate 11, a frame 13 for defining a cathode compartment also functioning as a concentrating compartment extending along the outer periphery of the cathode plate 12 which are superposed in this order. A cation-exchange membrane 14, a frame 20 for defining a desalting compartment, an anion-exchange membrane 15, and a frame 16 for defining an anode compartment also functioning as a concentrating compartment are superposed on the frame 13 in this order. An anode plate 17 is superposed on the frame 16 so as to face the anion exchange membrane 15. An anode end plate 18 is superposed on the anode plate 17. The apparatus is tightened by bolts or the like.

The space defined by the inner surface of the frame 20 is the desalting compartment.

A partition member 21 is provided in the desalting compartment and an ion exchange resin 23 consisting of a mixture of an anion exchange resin and a cation exchange resin is filled within the partition member 21.

The space defined by the frame 13 is the cathode compartment 30 also functioning as a concentrating compartment and the space defined by the frame 16 is the anode compartment 40 also functioning as a concentrating compartment. The cathode compartment 30 and anode compartment 40 each functioning also as concentrating compartments are filled with the cation exchange membrane 8 as an electric conductive material.

Openings 31, 32, 35 and 36 are provided in the end plate 11 and the frame 13, and slits 33 and 34 are provided on the frame 13, in order to feed cathode water into the cathode compartment 30.

The openings 31 and 32 overlap with each other and the openings 35 and 36 also overlap with each other. The openings 32 and 35 of the frame 13 each open into the cathode compartments 30 also functioning as a concentrating compartment through the slits 33 and 34.

The cathode water flows through the openings 31 and 32, the slit 33, the cathode compartment 30 also functioning as a concentrating compartment, the slit 34 and the openings 35 and 36, in this order, and then is discharged as cathode water functioning also as concentrated water.

Openings 41, 42, 45 and 46 are provided in the end plate 18 and the frame 16, and skits 43 and 44 are provided on the frame 16, in order to feed anode water into the anode compartment 40.

The openings 41 and 42 overlap with each other and the openings 45 and 46 also overlap with each other. The openings 42 and 45 of the frame 16 each open into the anode compartment 40 also functioning as a concentrating compartment through the slits 43 and 44.

The anode water flows through the openings 41 and 42, the slit 43, the anode compartment 40 also functioning as a concentrating compartment, the slit 44 and the openings 45 and 46, in this order, and then is discharged as anode water functioning also as concentrated water.

Openings 51, 52, 53, 54, 57, 58, 59 and 60 (the openings 58 and 59 are not shown in the figures.) are provided in the end plate 18, the anion exchange membrane 15 and frame 16 and 18, and slits 55 and 56 are provided on the frame 20, in order to feed raw into the desalting compartment defined by the frame 20. The openings 51 and 56 are provided in the end plate 18, the openings 54 and 57 are provided in the frame 20, the openings 52 and 59 are provided in the frame 16, and the openings 53 and 58 are provided in the anion exchange membrane 15.

The openings 51 to 54 overlap with each other and the openings 57 to 60 also overlap with each other. The openings 54 and 57 of the frame 20 each open into the desalting compartment through the slits 55 and 56.

The raw water flows through the openings 51, 52, 53 and 54, the slit 55, the desalting compartment, the slit 56 and the openings 57 to 60, in this order, and then is discharged as deionized water (the product).

The frame 20 has a rectangular shape extending in a vertical direction. The partition member 21 arranged inside the frame 20 is in a honeycomb form of a hexagonal shape in which a large number of cells 22 are arranged in vertical and lateral directions in such a manner that a pair of sides of each cell 22 extend in the longitudinal direction of the frame 20, i.e. in the vertical direction.

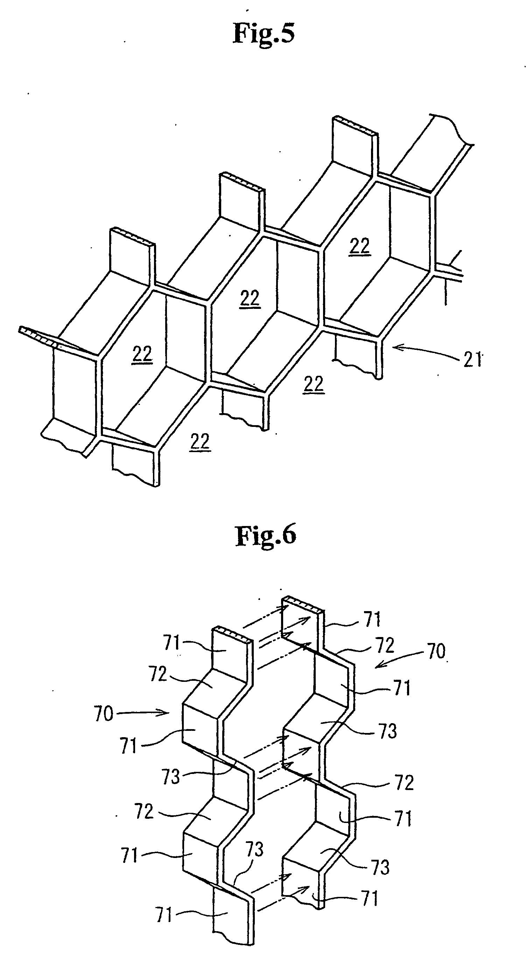

The partition member 21 may be previously formed as an integral part or may be formed by combining a plurality parts. For example, as shown in Fig.6, the partition member 21 may be formed by connecting vertical surfaces 71 of zigzag plates 70. Each zigzag plate 70 comprises inclined surfaces 72, 73 which are connected at an angle 120° with the vertical surfaces 71. In order to connect the vertical surfaces 71 together, adhesives may be employed. The zigzag plate 70 is made of material which is permeable to water but not permeable to ion exchange resin, e.g. woven fabric, non-woven fabric, mesh, and porous material. The zigzag plate 70 is preferably formed to have rigidity by using synthetic resin or metal having acid resistance and alkali resistance. The vertical surfaces 71 may be permeable or not permeable to water.

The partition member 21 may be fitted in the frame 20. The frame 20 may be provided with a water permeable sheet or a mesh attached to one side thereof and the partition member 21 may be bonded to the sheet or the mesh.

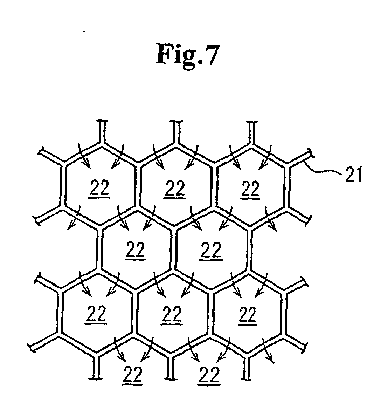

Raw water introduced into the desalting compartment through the openings 54 and 55 permeates the partition member 21 surrounding the cells 22 so as to flow into adjacent cells 22 and thus gradually flows downwardly as shown in Fig.7. During this, the water is deionized. Finally, the water reaches the bottom of the desalting compartment and flows out of the electrodeionization apparatus through the slit 56 and openings 57 to 60 as deionized water.

The general direction of water in the desalting compartment is a downward vertical direction because the opening 54 and the slit 55 for introducing raw water exist at the top of the frame 20 and the slit 56 and the opening 57 for taking out the desalted water exist at the bottom of the frame 20. The partition 21 is inclined relative to the general direction of the water flow at the upper portions and the lower portions of the respective cells 22, so that the water flows obliquely and downwardly from one cell 22 into the lower left cell 22 and the lower right cell 22. Therefore, the water flows substantially uniformly to all cells 22, thereby improving the contact efficiency between the water and the ion exchanger.

In this desalting compartment, since the cells 22 are relatively small, the downward pressure applied to the ion exchange resin in each cell by the self weight of the ion exchanger and water pressure is low. Therefore, the ion exchange resin is not compressed in any of the cells 22, thereby preventing the ion exchange resin from being partially compressed at the lower portion of the cells. In this embodiment, the ion exchange resin filled in the cells 22 is a mixture of an anion exchange resin and a cation exchange resin, and it may employ the following filling patterns (i) to (iii).
(i) One of the anion exchange resin, the cation exchange resin, and the amphoteric ion exchange resin is filled in all of the cells.
(ii) A mixture or mixtures of two or three of the anion exchange resin, the cation exchange resin, and the amphoteric ion exchange resin is filled in all of the cells, wherein the mixing ratio and mixing kinds may be common for all of the cells or may be different partially or entirely.
(iii) The anion exchange resin is filled in one part of cells 22, the cation exchange resin is filled in another part of cells 22, a mixture of the anion exchange resin and the cation exchange resin, or the amphoteric ion exchange resin is filled in the residual part of cells 22.

In the cases (ii) and (iii), the number of cells 22 in which anion exchange resin is filled and the number of cells 22 in which cation exchange resin is filled may be controlled according to the ratios of anion and cation in the raw water.

Since this electrodeionization apparatus as shown in Figs. 4 to 7 also has a smaller number of compartments, the electrical resistance thereof is low, so that adequate electric current can flow at lower voltage.

Since the partition member having a honeycomb structure is fitted in the desalting compartment, this electrodeionization apparatus can provide treated water having high purity.

This electrodeionization apparatus is very suitable for a use in which a small amount of treated water is produced, such as in a small laboratory and for a small fuel battery.

In Fig.1, the desalting compartment 7 is filled with a mixture of an anion exchange resin and a cation exchange resin, and it may be filled with one of or a mixture of two or more of an anion exchange resin, a cation exchange resin and an ampholytic ion exchange resin.

Examples of the electrically conductive material filled in the electrode-concentration compartments 5 and 6 are a cation exchange resin or fiber, an anion exchange resin or fiber, a mixture of those, active carbon, a metal mesh, etc. The cathode-concentration compartment 5 also working as a concentrating compartment and the anode-concentration compartment 6 also working as a concentrating compartment may be filled with different electrically conductive materials.

According to the embodiment, even when raw water contains 1 to 5 mg/L CaCO₃ of calcium ion and 2 to 10 mg/L as C of inorganic carbon, the electrodeionization apparatus requires low applied voltage to perform effective treatment so as to provide deionized water having good quality.

In Fig.2a, deionized water is fed to the anode-concentration compartment 6 and raw water is fed the cathode-concentration compartment 5 but the apparatus is not limitative thereto. Instead thereof, a part of the concentrated water discharged from the anode-concentration compartment 6 may be fed to the cathode-concentration compartment 5 in order to improve the rate of recovery of water. In this case, although bicarbonate ions are concentrated in the concentrated water in the anode-concentration compartment 6, production of calcium carbonate can be prevented even when the concentrated water is fed into the cathode-concentration compartment 5, because the concentrated water nerely free from calcium ion, so that the tendency to produce the calcium carbonate is reduced.

### Examples

Without further elaboration, it is believed that one skilled in the art, using the preceding description, can utilize the present invention to its fullest extent. The following embodiments are, therefore, to be construed as merely illustrative, and not limitative in any way whatsoever, of the remainder of the disclosure.

The present invention is further illustrated by the following Examples.

### Example 1

Raw water containing bicarbonate ions and dissolved CO₂ ions in a total amount (expressed as inorganic carbon) of 6mg/L as C and calcium ions in an amount of 4mg/L as CaCO₃ and having characteristics as shown in Table 1 was treated by the electrodeionization apparatus as shown in Fig.2a to produce deionized water.

The specifications of the employed electrodeionization apparatus were as follows:
The desalting compartment 7 has a thickness of 5mm.
The compartment was filled with 20 ml of a mixture of an anion exchange resin ("SA10A, available from Mitsubishi Chemical Ltd.) and a cation exchange resin ("SK1B", available from Mitsubishi Chemical Ltd.) in which the mixing ratio of the anion exchange resin to the cation exchange resin is 7:3.
The anode-concentration compartment 6 has a thickness of 2.5mm.
The compartment was filled with 10ml of the cation exchange resin ("SK1B", available from Mitsubishi Chemical Ltd.).
The cathode-concentration compartment 5 has a thickness of 2.5mm.
The compartment was filled with 10ml of the cation exchange resin ("SK1B", available from Mitsubishi Chemical Ltd.).

A part of the raw water was fed into the desalting compartment 7 at a rate of 3L/h and the residual part thereof was fed into the anode-concentration compartment 6 at a rate of 3L/h. The direction of the flow in the cathode-concentration compartment 5 was counter to that in the desalting compartment 7. The water thus concentrated was discharged from the system. A part of the obtained deionized water was fed into the anode-concentration compartment 6 at a rate of 5L/h, the direction of the flow of which in the anode-concentration compartment 6 was counter to that in the desalting compartment 7, and the water thus concentrated was discharged from the system. The residual part thereof was taken out as the treated water.

The operation was conducted under this condition for 24 hours with a constant electric current and measurements of the applied voltage were made during the operation. The measurements are shown in Table 1. The characteristics of the obtained deionized water are also shown in Table 1.

### Example 2

By the use of the electrodeionization apparatus having the same specifications as that employed in Example 1, the raw water was fed to the desalting compartment 7 at a rate of 3L/h, parts of the obtained deionized water were fed to the anode-concentration compartment 6 and the cathode-concentration compartment 5 at a rate of 1L/h counter to the flow in the desalting compartment, and the water thus concentrated was discharged from the system, as shown in Fig.2b. The other conditions in this operation were the same as

### Example 1.

The operation was conducted under these conditions for 24 hours with a constant electric current and measurements of the applied voltage were made during the operation. The measurements are shown in Table 1. The characteristics of the obtained deionized water are also shown in Table 1.

### Comparative Example 1

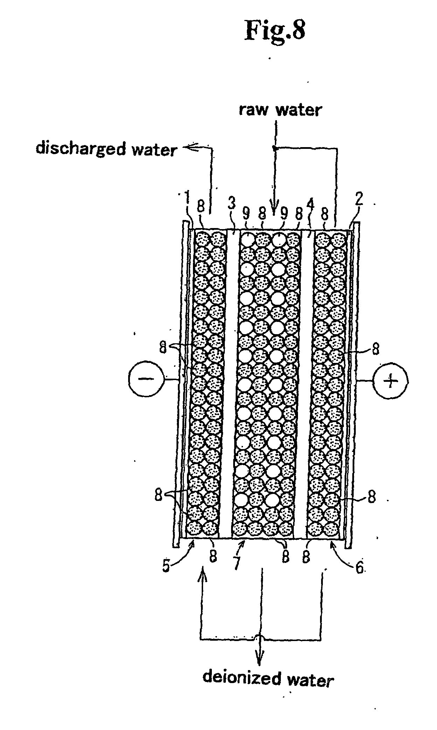

By the use of the electrodeionization apparatus having the same specifications as that of Example 1 except for the direction of flow in the electrode compartments, a part of the raw water was fed to the desalting compartment 7 at a rate of 3L/h and the residual part of the raw water was anode-concentration compartment 6 at a raw rate of 3L/h parallel to the flow in the desalting compartment 7, as shown in Fig.8. The concentrated water flowing out of the anode-concentration compartment 6 was fed to the cathode-concentration compartment 5 counter to the flow in the desalting compartment 7 and the water thus further concentrated was discharged from the system. The other conditions in this operation were the same as

### Example 1.

The operation was conducted under these conditions for 24 hours with a constant electric current and measurements of the applied voltage were made during the operation. The measurements are shown in Table 1. The characteristics of the obtained deionized water are also shown in Table 1.

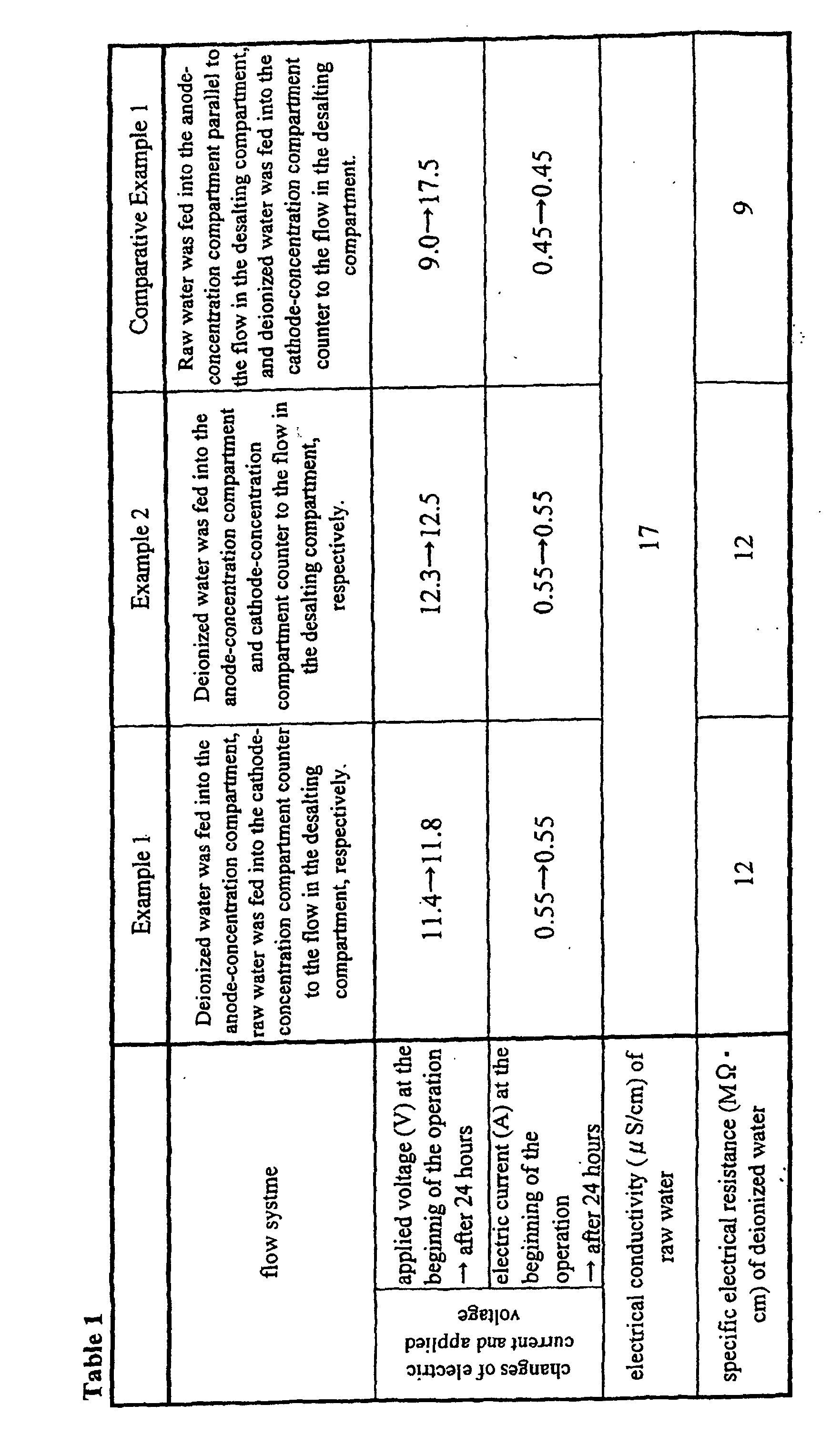

As shown in Table 1, the applied voltage in Comparative Example 1 in which the raw water was fed to the anode-concentration compartment 6 became twice as high as at the beginning of the operation. In contrast, the voltage scarcely increased in Example 1 in which the deionized water was fed into the anode-concentration compartment 6 or Example 2 in which the deionized water was fed into the anode-concentration compartment 6 and the cathode-concentration compartment 5.

After the experiment, each electrodeionization apparatus was taken apart and checked inside. In the electrodeionization apparatus of Comparative Example 1, calcium carbonate was found on the concentration surface of the anion exchange membrane, but in those of Examples 1 and 2 calcium carbonate was not found thereon. There was little difference in quality of the obtained deionized water between Examples and Comparative Examples, and good quality of the deionized water was obtained in each of Examples and Comparative Examples.

The results show that the electrodeionization apparatus of the present invention prevents production of calcium carbonate, so that it can produce deionized water continuously at a low voltage.

As described above, even when raw water containing high concentrations of calcium ions and bicarbonate ions is treated, the electrodeionization apparatus can perform stablly and effectively by feeding deionized water to the cathode-concentration compartment or to the anode-concentration compartment and the cathode-concentration compartment, without causing production of calcium carbonate, rise in the applied voltage, or logging of the electrode-concentration compartments.

The foregoing is considered illustrative only of the principles of the invention. Further, since numerous modifications and changes will readily occur to those skilled in the art, it is not desired to limit the invention to the exact construction and operation shown and described. Accordingly, all suitable modifications and equivalents may be resorted to that fall within the scope of the invention and the appended claims.

## Claims

1. An electrodeionization apparatus, comprising:
a cathode (80);
an anode (90);
a cation exchange membrane (3) and an anion exchange membrane (4) arranged between the cathode (80) and the anode (90);
a desalting compartment (7) formed between the cation exchange membrane (3) and the anion exchange membrane (4), the cation exchange membrane (3) being arranged between the cathode (80) and the desalting compartment (7) and the anion exchange membrane (4) being arranged between the anode (90) and the desalting compartment (7);
an ion exchanging material (8, 9) filled in the desalting compartment (7);
a channel (82) for cations to carry cations having migrated from the desalting compartment (7) through the cation exchange membrane (3) out of the electrodeionization apparatus; and
a channel (92) for anions to carry anions having migrated from the desalting compartment (7) through the anion exchange membrane (4) out of the electrodeionization apparatus, **characterized in that** the channel (82) for cations is provided in the cathode (80), the channel (92) for the anions is provided in the anode (90), the cation exchange membrane (3) is in contact with the cathode (80), and the anion exchange membrane (4) is in contact with the anode (90).

2. An electrodeionization apparatus as claimed in claim 1, wherein
the cathode (80) and the anode (90) are composed of a laminate of a plurality of perforated plates (100) having a lot of holes (101) in which the holes of one perforated plate overlap with the adjacent hole of another perforated plate.

3. An electrodeionization apparatus as claimed in claim 1 or claim 2, wherein
a partition member (21) is fitted in the desalting compartment (7), so that cells (22) are defined by the partition member (21), the cation exchange membrane (3) and the anion exchange membrane (4) in the desalting compartment
the ion exchanging material (8, 9) is filled in the cells (22);
at least a part of the partition member (21) is inclined relative to a normal flow direction of water in the desalting compartment (7);
at least the inclined part of the partition member (21) allows the water to pass, but prevents the ion exchanging material (8, 9) to pass therethrough.

4. An electrodeionization apparatus as claimed in any one of claims 1 through 3, comprising means for feeding parts of the water into the channels (82, 92) for cations and for anions, respectively.

5. An electrodeionization apparatus as claimed in any one of claims 1 through 3, comprising means for feeding a part of deionized water flowing out of the desalting compartment (7) into the channel (92) for anions.

6. An electrodeionization apparatus as claimed in any one of claims 1 through 3, comprising means for feeding a part of deionized water flowing out of the desalting compartment (7) into the channels (82, 92) for cations and for anions, respectively.

7. A use of the electrodeionization apparatus as claimed in any one of claims 1 through 6 for producing deionized water.

## Patentansprüche

1. Elektrodenionisierungsvorrichtung umfassend:
eine Katode (80);
eine Anode (90);
eine Kationenaustauschmembran (3) und eine Anionenaustauschmembran (4), welche zwischen der Katode (80) und der Anode (90) angeordnet sind;
eine Entsalzungskammer (7), welche zwischen der Kationenaustauschmembran (3) und der Anionenaustauschmembran (4) ausgebildet ist, wobei die Kationenaustauschmembran (3) zwischen der Katode (80) und der Entsalzungskammer (7) angeordnet ist und die Anionenaustauschmembran (4) zwischen der Anode (90) und der Entsalzungskammer (7) angeordnet ist;
ein Ionenaustauschmaterial (8, 9), welches in die Entsalzungskammer (7) gefüllt ist;
einen Kanal (82) für Kationen, um Kationen, welche von der Entsalzungskammer (7) durch die Kationenaustauschmembran (3) aus der Elektrodenionisierungsvorrichtung gewandert sind, aufzunehmen; und
einen Kanal (92) für Anionen, um Anionen, welche von der Entsalzungskammer (7) durch die Anionenaustauschmembran (4) aus der Elektrodenionisierungsvorrichtung gewandert sind, aufzunehmen,
**dadurch gekennzeichnet, dass** der Kanal (82) für die Kationen in der Katode (80) vorhanden ist, der Kanal (92) für die Anionen in der Anode (90) vorhanden ist, die Kationenaustauschmembran (3) sich in Kontakt mit der Katode (80) befindet, und sich die Anionenaustauschmembran (4) in Kontakt mit der Anode (90) befindet.

2. Elektrodenionisierungsvorrichtung nach Anspruch 1, wobei die Katode (80) und die Anode (90) aus einem Laminat einer Mehrzahl von perforierten Platten (100) mit einer Menge von Löchern (101) zusammengesetzt sind, wobei die Löcher von einer perforierten Platte das benachbarte Loch einer anderen perforierten Platte überlappen.

3. Elektrodenionisierungsvorrichtung nach Anspruch 1 oder Anspruch 2, wobei
ein Aufteilungsteil (21) in die Entsalzungskammer (7) derart eingepasst ist, dass durch das Aufteilungsteil (21), die Kationenaustauschmembran (3) und die Anionenaustauschmembran (4) in der Entsalzungskammer (7) Zellen (22) definiert sind;
das Ionenaustauschmaterial (8, 9) in die Zellen (22) gefüllt ist;
zumindest ein Teil des Aufteilungsteils (21) relativ zu einer normalen Flussrichtung von Wasser in der Entsalzungskammer (7) geneigt ist;
zumindest der geneigte Teil des Aufteilungsteils (21) ermöglicht, dass das Wasser durchgelassen wird, aber verhindert, dass das Ionenaustauschmaterial (8, 9) dort hindurch gelassen wird.

4. Elektrodenionisierungsvorrichtung nach einem der Ansprüche 1 bis 3, Mittel umfassend, um Teile des Wassers in die Kanäle (82, 92) für Kationen bzw. für Anionen einzuführen.

5. Elektrodenionisierungsvorrichtung nach einem der Ansprüche 1 bis 3, Mittel umfassend, um einen Teil von deionisiertem Wasser, welches aus der Entsalzungskammer (7) fließt, in den Kanal (92) für Anionen einzuführen.

6. Elektrodenionisierungsvorrichtung nach einem der Ansprüche 1 bis 3, Mittel umfassend, um einen Teil von deionisiertem Wasser, welches aus der Entsalzungskammer (7) fließt, in die Kanäle (82, 92) für Kationen bzw. für Anionen einzuführen.

7. Verwendung der Elektrodenionisierungsvorrichtung nach einem der Ansprüche 1 bis 6 zur Herstellung von deionisiertem Wasser.

## Revendications

1. Appareil d'électrodésionisation, comprenant :
une cathode (80) ;
une anode (90) ;
une membrane d'échange de cations (3) et une membrane d'échange d'anions (4) agencées entre la cathode (80) et l'anode (90) ;
un compartiment de dessalage (7) formé entre la membrane d'échange de cations (3) et la membrane d'échange d'anions (4), la membrane d'échange de cations (3) étant agencée entre la cathode (80) et le compartiment de dessalage (7), et la membrane d'échange d'anions (4) étant agencée entre l'anode (90) et le compartiment de dessalage (7) ;
un matériau d'échange d'ions (8, 9) rempli dans le compartiment de dessalage (7) ;
un canal (82) pour cations afin d'emporter les cations ayant migré depuis le compartiment de dessalage (7) à travers la membrane d'échange de cations (3) hors de l'appareil d'électrodésionisation ; et
un canal (92) pour anions afin d'emporter les anions ayant migré depuis le compartiment de dessalage (7) à travers la membrane d'échange d'anions (4) hors de l'appareil d'électrodésionisation, **caractérisé en ce que** le canal (82) pour cations est prévu dans la cathode (80), le canal (92) pour anions est prévu dans l'anode (90), la membrane d'échange de cations (3) est en contact avec la cathode (80), et la membrane d'échange d'anions (4) est en contact avec l'anode (90).

2. Appareil d'électrodésionisation selon la revendication 1, dans lequel
la cathode (80) et l'anode (90) sont composées d'un stratifié d'une pluralité de plaques perforées (100) comportant beaucoup de trous (101) dans lequel les trous d'une plaque perforée se superposent au trou adjacent d'une autre plaque perforée.

3. Appareil d'électrodésionisation selon la revendication 1 ou la revendication 2, dans lequel
un élément de partition (21) est ajusté dans le compartiment de dessalage (7), de façon à ce que des cellules (22) soient définies par l'élément de partition (21), la membrane d'échange de cations (3) et la membrane d'échange d'anions (4) dans le compartiment de dessalage (7) ;
le matériau d'échange d'ions (8, 9) est chargé dans les cellules (22) ;
au moins une partie de l'élément de partition (21) est inclinée par rapport à une direction d'écoulement normal d'eau dans le compartiment de dessalage (7) ;
au moins la partie inclinée de l'élément de partition (21) permet à l'eau de passer, mais empêche le matériau d'échange d'ions (8, 9) de passer à travers elle.

4. Appareil d'électrodésionisation selon l'une quelconque des revendications 1 à 3, comprenant un moyen pour alimenter des parties de l'eau dans les canaux (82, 92) pour cations et pour anions, respectivement.

5. Appareil d'électrodésionisation selon l'une quelconque des revendications 1 à 3, comprenant un moyen pour alimenter une partie de l'eau désionisée s'écoulant hors du compartiment de dessalage (7) dans le canal (92) pour anions.

6. Appareil d'électrodésionisation selon l'une quelconque des revendications 1 à 3, comprenant un moyen pour amener une partie de l'eau désionisée s'écoulant hors du compartiment de dessalage (7) dans les canaux (82, 92) pour cations et pour anions, respectivement.

7. Utilisation de l'appareil d'électrodésionisation selon l'une quelconque des revendications 1 à 6, pour produire de l'eau désionisée.
